# EUROPÄISCHE PATENTANMELDUNG

(11) **EP 1 741 620 A1**
(43) Veröffentlichungstag der Anmeldung: **10.01.2007**
(21) Anmeldenummer: 06022255.1
(22) Anmeldetag: 15.07.2004
(51) Int. Cl.: B62D 53/08

(54) **Sattelkupplung**

(30) Priorität: 09.09.2003 DE 10341880
(62) Teilanmeldung aus: 04016701.7
(71) Anmelder: Baier & Köppel GmbH & Co., D-91257 Pegnitz (DE)
(72) Erfinder: Brendel, Jürgen, 91278 Pottenstein (DE)
(74) Vertreter: Zech, Stefan Markus

(57) **Zusammenfassung**

Sattelkupplung zur Montage an einem Zugfahrzeug, um einen Aufleger lösbar am Zugfahrzeug zu befestigen, wobei die Sattelkupplung (11) ein fahrzeugseitiges Grundteil (12) und eine gegenüber dem Grundteil (12) verschwenkbare Auflageplatte (13) aufweist,
wobei die Sattelkupplung (11) weiterhin eine Schmiereinrichtung (14) mit einem Schmierstoffreservoir (15), einer Schmierstoffpumpe (16) und mindestens einer von der Schmierstoffpumpe (16) aus dem Schmierstoffreservoir (15) mit Schmierstoff versorgten Schmierstelle umfasst. Die Schmiereinrichtung zeichnet sich dadurch aus, dass die Schmierstoffpumpe (16) durch die Schwenkbewegung der Auflageplatte (13) relativ zum Grundteil (12) aufnehmende Wirkübertragungsmittel (18 bis 20, 23) angetrieben wird.

## Beschreibung

Die Erfindung betrifft eine Sattelkupplung zur Montage an einem Zugfahrzeug, um einen Anhänger am Zugfahrzeug anzukuppeln, wobei die Sattelkupplung ein fahrzeugseitiges Grundteil und eine gegenüber dem Grundteil verschwenkbare Auflageplatte aufweist, wobei die Sattelkupplung weiterhin eine Schmiereinrichtung mit einem Schmierstoffreservoir, einer Schmierstoffpumpe und mindestens einer von der Schmierstoffpumpe aus dem Schmierstoffreservoir mit Schmierstoff versorgten Schmierstelle umfasst.

Eine Sattelkupplung der gattungsgemäßen Art ist dem Fachmann hinlänglich bekannt und in einer speziellen, keineswegs zwingenden Ausgestaltung beispielsweise in der DE 296 03 641 U1 beschrieben.

Derartige Sattelkupplungen werden bislang entweder von einer externen Schmiereinrichtung mit Schmierstoff versorgt oder - unter Vermeidung einer Schmierstoffpumpe - durch eine mit Druck zu beaufschlagende bzw. beaufschlagte Schmierstoffbuchse, die direkt an der Sattelkupplung angebracht sein kann.

Die Aufgabe der vorliegenden Erfindung besteht gegenüber dem geschilderten Stand der Technik darin, eine Sattelkupplung mit einem alternativen Schmierkonzept zu schaffen. Eine weitere Aufgabe besteht darin, eine entsprechende Schmiereinrichtung sowie ein Verfahren zur Schmierung einer Sattelkupplung vorzuschlagen.

Diese Aufgaben werden in vorrichtungstechnischer Hinsicht durch die Merkmale der Patentansprüche 1 bzw. 8 und in verfahrenstechnischer Hinsicht durch die Merkmale des Patentanspruchs 9 gelöst.

Eine Kernüberlegung der vorliegenden Erfindung besteht darin, dass zunächst eine an der Sattelkupplung angeordnete Schmiereinrichtung geschaffen wird, die eine eigene Schmierstoffpumpe umfasst. Dieser übergeordnete Aspekt der vorliegenden Erfindung wird durch eine besonders zweckmäßige Lösung hinsichtlich der Energieversorgung der an der Sattelkupplung vorgesehenen Schmierstoffpumpe weiter konkretisiert. Die Schmierstoffpumpe an der Sattelkupplung wird durch diesen weiteren Kerngedanken der vorliegenden Erfindung nämlich durch die Schwenkbewegung der Auflageplatte relativ zum Grundteil bzw. zum Zugfahrzeug angetrieben. Der Antrieb erfolgt durch Wirkübertragungsmittel, welche die Schwenkbewegung aufnehmen.

In einer konkreten Ausgestaltung umfassen die Wirkübertragungsmittel einen Antriebshebel zur Übertragung der Schwenkbewegung und einen Freilauf. Der Freilauf kann insbesondere als Hülsenfreilauf ausgebildet sein. Er hat den Zweck, die vom Antriebshebel ausgeübte Hin- und Herbewegung in eine einseitig gerichtete Drehbewegung zu überführen, so dass die Drehrichtung stets gleich bleibt.

In einer konkreten Ausgestaltung ist der Freilauf auf einer Welle angeordnet derart, dass die Hin- und Herbewegung des Antriebshebels eine Drehbewegung der Welle zum Antrieb der Schmierstoffpumpe bewirkt.

In einer bevorzugten Ausgestaltung umfasst die Schmierstoffpumpe einen in einem Zylinder gelagerten Kolben, wobei der Kolben über einen mit der Welle verbundenen Exzenter angetrieben wird. Über den Exzenter lässt sich ein gewünschter Verlauf des Kolbenhubes einstellen.

In einer konkreten Ausgestaltung der vorliegenden Erfindung sind weiterhin Dosierungsmittel vorgesehen, um eine gewünschte Dosierung bezogen auf die Schwenkbewegungen der Sattelkupplung einstellen zu können. Hierzu kann beispielsweise das Ansaugvolumen des Zylinders pro Kolbenhub eingestellt werden. Selbstverständlich sind aber auch andere Dosierungsmittel möglich, die bei einer bestimmten Abfolge von Schwenkbewegungen der Sattelkupplung die Abgabe einer jeweils gewünschten, vorbestimmten Menge an Schmierstoff an eine Schmierstelle festlegen.

Obwohl prinzipiell in vielen Fällen die Versorgung einer einzigen Schmierstelle, beispielsweise einer zentralen Schmierstelle an der Auflageplatte ausreichend sein kann, ist mit der erfindungsgemäßen Lösung auch die Versorgung mehrerer Schmierstellen an der Sattelkupplung möglich. In einer konkreten Ausgestaltung kann hierfür der Schmierstoffpumpe ein Verteiler, insbesondere ein Progressivverteiler nachgeschaltet sein, um mehrere Schmierstellen mit Schmierstoff zu versorgen. Alternativ ist es natürlich auch denkbar, an einer Sattelkupplung mehrere Schmierstoffpumpen vorzusehen, die jeweils mit zugeordneten Schmierstellen in Fluidverbindung stehen. Die Schmierstoffpumpen können dabei entweder durch einen gemeinsamen Exzenter oder durch jeweils separate Wirkübertragungsmittel durch die Schwenkbewegung der Auflageplatte angetrieben werden.

Schmierstellen können bei der erfindungsgemäßen Schmiereinrichtung insbesondere an der Verriegelung der Sattelkupplung und/oder an der Auflageplatte der Sattelkupplung und/oder an der Schwenkachse zwischen Auflageplatte und Grundteil ausgebildet sein.

Erfindungsgemäß beansprucht wird weiterhin eine Schmiereinrichtung, die zur Montage an einer Sattelkupplung ausgebildet und bestimmt ist und durch die Schwenkbewegung der Auflageplatte relativ zum Grundteil bzw. zum Zugfahrzeug aufnehmende Wirkübertragungsmittel angetrieben wird.

Weiterhin wird erfindungsgemäß auch ein Verfahren zur Schmierung einer Sattelkupplung beansprucht, die an einem Zugfahrzeug montiert ist, wobei die Sattelkupplung ein fahrzeugseitiges Grundteil und eine gegenüber dem Grundteil verschwenkbare Auflageplatte aufweist, wobei die Schwenkbewegungen der Auflageplatte relativ zum Grundteil bzw. zum Zugfahrzeug ausgenutzt werden, um die Schmierstoffpumpe anzutreiben.

Auflageplatte und Grundteil sind im Rahmen der Erfindung so zu verstehen, dass zwei durch Relativbewegungen zwischen Zugfahrzeug und Anhänger im angekuppelten Zustand zu Schwenkbewegungen angetriebene Teile der Sattelkupplung gemeint sind, wobei das Grundteil das kinematisch dem Zugfahrzeug näher gelegene und die Auflageplatte das kinematisch dem Anhänger näher gelegene Teil der Sattelkupplung bezeichnen soll. Weiter wird klargestellt, dass bevorzugtermaßen in erster Linie eine Schwenkbewegung zwischen Zugfahrzeug und Anhänger um eine quer zur Fahrtrichtung horizontale Achse ausgenutzt wird; es ist aber auch denkbar, Schwenkbewegungen um die Vertikalachse und/oder andere Schwenkbewegungen zum Antrieb der Schmierstoffpumpe auszunutzen.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert.

Hierbei zeigen:
- Fig. 1: eine Ausführungsform der erfindungsgemäßen Sattelkupplung mit Schmiereinrichtung mit perspektivischer Ansicht,
- Fig. 2: die in der Ausführungsform nach Fig. 1 eingesetzte Schmierstoffpumpe in Querschnittsansicht,
- Fig. 3: eine perspektivische Ansicht der Schmierstoffpumpe nach Fig. 2,
- Fig. 4: eine zur Schnittansicht nach Fig. 2 orthogonale Schnittansicht durch die bei der Ausführungsform nach Fig. 1 eingesetzten Schmierstoffpumpe.

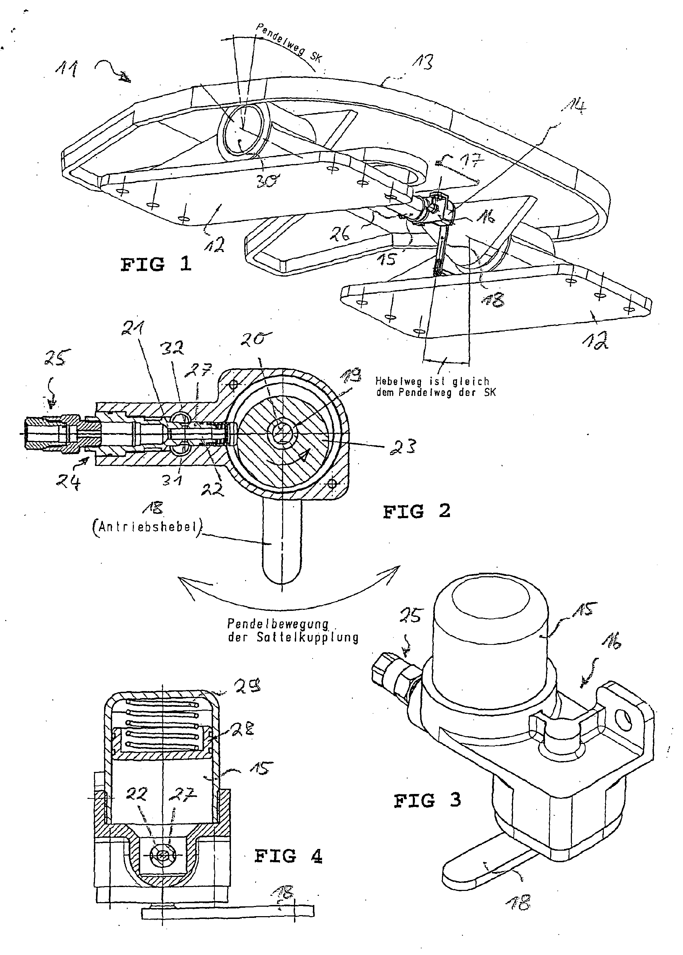

In Fig. 1 ist eine Sattelkupplung 11 mit einer Schmiereinrichtung 14 nach der Erfindung in schematischer Perspektivansicht dargestellt. Die Sattelkupplung 11 umfasst zunächst eine etwa hufeisenförmige Auflageplatte 13, die an ihrer Unterseite gegenüber einem fahrzeugseitigen Grundteil 12 gelenkig gelagert ist. Das fahrzeugseitige Grundteil 12 besteht bei der vorliegenden Ausführungsform aus zwei voneinander getrennten Lagerböcken, die jeweils um einen Lagerbolzen 30 der Auflageplatte 13 verschwenkbar gelagert sind.

Bei am Zugfahrzeug angekuppelten Anhänger gleicht die Schwenkbewegung zwischen Auflageplatte 13 und fahrzeugseitigem Grundteil 12 - hier in Form von zwei separaten Lagerböcken ausgebildet - Bewegungen aus, die bei Überfahren von Kuppen, Mulden, Bodenunebenheiten, etc. entstehen. Diese Schwenkbewegung wird zum Antrieb einer Schmierstoffpumpe 16 eingesetzt, die Bestandteil der bereits erwähnten Schmiereinrichtung 14 ist.

Die Schmiereinrichtung 14 umfasst weiterhin ein in der vorliegenden Ausführungsform an der Schmierstoffpumpe 16 angebrachtes Schmierstoffreservoir 15 sowie mindestens eine Schmierstelle 17, die über eine Schmiermittelleitung 26 mit der Schmierstoffpumpe 16 in Fluidverbindung steht. Die Schmiermittelleitung 26 ist hier über einen pumpenseitigen Anschlussstutzen 25 mit der Schmierstoffpumpe 16 verbunden. Die Schmierstelle 17 ist hier rein schematisch dargestellt und befindet sich an sich auf der dem Grundteil 12 abgewandten Seite der Auflageplatte 13, um die Auflageplatte 13 mit Schmierstoff zu versorgen.

Zur Aufnahme der Schwenkbewegungen zwischen Auflageplatte 13 und (fahrzeugseitigem) Grundteil 12, hier einem der beiden Lagerböcke sind Wirkübertragungsmittel 18, 19, 20, 23 vorgesehen, welche die Schwenkbewegung zwischen Auflageplatte 13 und (fahrzeugseitigem) Grundteil 12 zum Antrieb mindestens eines Kolbens 22 einer Schmierstoffpumpe 16 übersetzen. Konkret umfassen die Wirkübertragungsmittel bei der vorliegenden Ausführungsform, wie aus den Figuren 1 und 2 erkennbar einen an der Schmierstoffpumpe 16, die in der vorliegenden Ausführungsform an der Unterseite der Auflageplatte 13 befestigt ist, ausgehenden Antriebshebel 18, dessen distales Ende am fahrzeugseitigen Grundteil 12 befestigt ist.

Bei der vorliegenden Ausführungsform ist die Anordnung in etwa so getroffen, dass der Pendelweg der Auflageplatte 13 relativ zum (fahrzeugseitigen) Grundteil 12 in etwa dem Hebelweg des Antriebshebels 18 entspricht. Es ist jedoch ohne weiteres ersichtlich, dass je nach Platzierung der Schmierstoffpumpe 16 bzw. der Befestigung bzw. Anlenkung des distalen Antriebshebels des Antriebshebels 18 auch andere Übersetzungsverhältnisse vorgegeben werden können. Ebenfalls ist es ohne weiteres denkbar, die Schmierstoffpumpe 16 an einem gegenüber dem Zugfahrzeug festen Teil, insbesondere dem (fahrzeugseitigen) Grundteil 12 zu befestigen und das distale Ende des Antriebshebels 18 mit einem Teil, das den Schwenkbewegungen der Auflageplatte 13 folgt oder mit der Auflageplatte 13 selbst zu verbinden.

Wie aus Fig. 2 erkennbar, werden die Hin- und Herbewegungen des Antriebshebels 18 auf einen Exzenter 23 der Schmierstoffpumpe 16 übertragen, wobei der Exzenter 23 einen in einem Zylinder 21 gelagerten Kolben 22 der Schmierstoffpumpe antreibt. Um zu verhindern, dass sich der Exzenter 23 mit Hin- und Herbewegung des Antriebshebels 18 ebenfalls hin- und herbewegt, ist auf einer gemeinsamen Welle 20 ein Freilauf 19 vorgesehen, der bewirkt, dass die Hin- und Herbewegung des Antriebshebels 18 in eine nur in einem Drehsinn gerichtet Antriebsbewegung überführt wird. Der Freilauf 19 ist hier als Hülsenfreilauf ausgebildet.

In einer bevorzugten, hier dargestellten Ausführungsform lässt sich die Dosiermenge der Schmierstoffpumpe 16 durch Dosierungseinstellmittel 24 über einen gewissen Bereich einstellen. In der hier konkret dargestellten Ausführungsform umfassen die Dosierungseinstellmittel 24 einen Zylindereinsatz 27, der gegenüber der Welle 20 und dem Exzenter 23 in seiner axialen Lage, beispielsweise durch Verschrauben in einem Gewinde verändert werden kann. Der Zylindereinsatz 27 bildet den für den Pumpvorgang maßgeblichen Zylinder 21, in dem der Kolben 22 gelagert ist, aus. Durch axiale Verlagerung des Zylindereinsatzes 27, die durch ein Herein- oder Herausschrauben des Zylindereinsatzes 27 erreicht werden kann, verändert sich das wirksame Pumpvolumen, da Zylinderöffnungen 31, 32 je nach Lage des Zylindereinsatzes bei einem Hubzyklus früher oder später freigegeben werden und entsprechend früher bzw. später das Zuströmen von Schmiermittel gestatten.

In Fig. 3 ist die Schmierstoffpumpe 16 in perspektivischer Ansicht und in Fig. 4 in einer zur Schnittansicht nach Fig. 2 orthogonalen Ansicht dargestellt. Aus den Figuren 3 und 4 lässt sich erkennen, dass an der Schmierstoffpumpe 16 unmittelbar das Schmierstoffreservoir 15 angeschlossen sein kann. Im Schmierstoffreservoir 15 kann eine bestimmte Menge Schmierstoff, der über einen vorgegebenen Nutzungszeitraum, beispielsweise für ca. 3 Jahre ausreichend ist, aufgenommen sein. Der Schmierstoff wird im Schmierstoffreservoir 15 über einen Schmierstofffolgekolben 28 und eine Spiralfeder 29 mit Druck beaufschlagt, so dass stets ausreichend Schmierstoff an den Zylinderöffnungen 31, 32 des Zylindereinsatzes 27 ansteht.

Die Sattelkupplung mit der erfindungsgemäßen Schmiereinrichtung bzw. die erfindungsgemäße Schmiereinrichtung zeichnen sich dadurch aus, dass eine äußerst zuverlässige Schmierung auch über einen langen Nutzungszeitraum sichergestellt werden kann, ohne dass ein Anschluss an eine externe Schmierung vorgenommen werden muss. Die Sattelkupplung bleibt damit inkl. der Schmiereinrichtung ein komplett autarkes Bauteil.

### Bezugszeichenliste

- 11: Sattelkupplung
- 12: (fahrzeugseitiges) Grundteil
- 13: Auflageplatte
- 14: Schmiereinrichtung
- 15: Schmierstoffreservoir
- 16: Schmierstoffpumpe
- 17: Schmierstelle
- 18: Wirkübertragungsmittel, Antriebshebel
- 19: Wirkübertragungsmittel, Freilauf
- 20: Wirkübertragungsmittel, Welle
- 21: Zylinder
- 22: Kolben
- 23: Wirkübrtragungsmittel, Exzenter
- 24: Dosierungseinstellmittel
- 25: Anschlussstutzen
- 26: Schmiermittelleitung
- 27: Zylindereinsatz
- 28: Schmierstofffolgekolben
- 29: Spiralfeder
- 30: Lagerbolzen
- 31, 32: Zylinderöffnungen

## Patentansprüche

1. Sattelkupplung zur Montage an einem Zugfahrzeug, um einen Anhänger am Zugfahrzeug anzukuppeln,
- wobei die Sattelkupplung (11) ein fahrzeugseitiges Grundteil (12) und eine gegenüber dem Grundteil (12) verschwenkbare Auflageplatte (13) aufweist,
- wobei die Sattelkupplung (11) weiterhin eine Schmiereinrichtung (14) mit einem Schmierstoffreservoir (15), einer Schmierstoffpumpe (16) und mindestens einer von der Schmierstoffpumpe (16) aus dem Schmierstoffreservoir (15) mit Schmierstoff versorgten Schmierstelle (17) umfasst, und
- wobei die Schmierstoffpumpe (16) durch die Schwenkbewegung der Auflageplatte (13) relativ zum Grundteil (12) bzw. zum Zugfahrzeug aufnehmende Wirkübertragungsmittel (18 bis 20, 23) angetrieben wird.

2. Sattelkupplung nach Anspruch 1,
**dadurch gekennzeichnet,**
**dass** die Wirkübertragungsmittel einen Antriebshebel (18) zur Übertragung der Schwenkbewegung und einen Freilauf (19) umfassen.

3. Sattelkupplung nach Anspruch 2,
**dadurch gekennzeichnet,**
**dass** der Freilauf (19) auf einer Welle (20) angeordnet ist derart, dass eine Hin- und Herbewegung des Antriebshebels (18) eine Drehbewegung der Welle (20) zum Antrieb der Schmierstoffpumpe (16) bewirkt.

4. Sattelkupplung nach einem der Ansprüche 1 bis 3,
**dadurch gekennzeichnet,**
**dass** die Schmierstoffpumpe (16) einen in einem Zylinder (21) gelagerten Kolben (22) umfasst und dass der Kolben (22) über einen mit der Welle (20) verbundenen Exzenter (23) angetrieben wird.

5. Sattelkupplung nach Anspruch 4,
**dadurch gekennzeichnet,**
**dass** Dosierungsmittel (24) an der Schmierstoffpumpe (16) vorgesehen sind, um ein gewünschtes Ansaugvolumen des Zylinders (21) pro Kolbenhub einstellen zu können

6. Sattelkupplung nach einem der Ansprüche 1 bis 5,
**dadurch gekennzeichnet,**
**dass** der Schmierstoffpumpe (16) ein Verteiler, insbesondere ein Progressivverteiler nachgeschaltet ist, um mehrere Schmierstellen (17) mit Schmierstoff zu versorgen.

7. Sattelkupplung nach einem der Ansprüche 1 bis 6,
**dadurch gekennzeichnet,**
**dass** die mit der Schmierstoffpumpe (16) in Fluidverbindung stehenden Schmierstellen (17) an der Verriegelung der Sattelkupplung (11) und/oder an der Auflageplatte (13) und/oder an der Schwenkachse zwischen Auflageplatte (13) und Grundteil (12) ausgebildet sind.

8. Schmiereinrichtung ausgebildet und bestimmt zur Montage an eine Sattelkupplung (11) gemäß einem der Ansprüche 1 bis 7.

9. Verfahren zur Schmierung einer Sattelkupplung (11), die an einem Zugfahrzeug montiert ist, wobei die Sattelkupplung (11) ein fahrzeugseitiges Grundteil (12) und eine gegenüber dem Grundteil (12) verschwenkbare Auflageplatte (13) aufweist,
**dadurch gekennzeichnet,**
**dass** die Schwenkbewegungen der Auflageplatte (13) relativ zum Grundteil (12) bzw. zum Zugfahrzeug ausgenutzt werden, um die Schmierstoffpumpe (16) anzutreiben.

## Geänderte Patentansprüche

### Geänderte Patentansprüche gemäss Regel 86(2) EPÜ.

**1.** Sattelkupplung zur Montage an einem Zugfahrzeug, um einen Anhänger am Zugfahrzeug anzukuppeln,
- wobei die Sattelkupplung (11) ein fahrzeugseitiges Grundteil (12) und eine gegenüber dem Grundteil (12) verschwenkbare Auflageplatte (13) aufweist,
- und wobei an der Sattelkupplung (11) weiterhin eine Schmiereinrichtung (14) angeordnet ist, die eine eigene Schmierstoffpumpe (16) umfasst.

**2.** Sattelkupplung nach Anspruch 1,
**dadurch gekennzeichnet,**
**dass** die an der Sattelkupplung (11) angeordnete Schmiereinrichtung (14) mit einem Schmierstoffreservoir (15) versehen ist.

**3.** Sattelkupplung nach Anspruch 1 oder 2,
**dadurch gekennzeichnet,**
**dass** die Schmierstoffpumpe (16) durch die Schwenkbewegung der Auflageplatte (13) relativ zum Grundteil (12) bzw. zum Zugfahrzeug aufnehmende Wirkübertragungsmittel (18 bis 20, 23) angetrieben wird.

**4.** Sattelkupplung nach Anspruch 3,
**dadurch gekennzeichnet,**
**dass** die Wirkübertragungsmittel einen Antriebshebel (18) zur Übertragung der Schwenkbewegung und einen Freilauf (19) umfassen.

**5.** Sattelkupplung nach Anspruch 4,
**dadurch gekennzeichnet,**
**dass** der Freilauf (19) auf einer Welle (20) angeordnet ist derart, dass eine Hin- und Herbewegung des Antriebshebels (18) eine Drehbewegung der Welle (20) zum Antrieb der Schmierstoffpumpe (16) bewirkt.

**6.** Sattelkupplung nach einem der Ansprüche 1 bis 5,
**dadurch gekennzeichnet,**
**dass** die Schmierstoffpumpe (16) einen in einem Zylinder (21) gelagerten Kolben (22) umfasst und dass der Kolben (22) über einen mit der Welle (20) verbundenen Exzenter (23) angetrieben wird.

**7.** Sattelkupplung nach Anspruch 6,
**dadurch gekennzeichnet,**
**dass** Dosierungsmittel (24) an der Schmierstoffpumpe (16) vorgesehen sind, um ein gewünschtes Ansaugvolumen des Zylinders (21) pro Kolbenhub einstellen zu können

**8.** Sattelkupplung nach einem der Ansprüche 1 bis 7,
**dadurch gekennzeichnet,**
**dass** der Schmierstoffpumpe (16) ein Verteiler, insbesondere ein Progressivverteiler nachgeschaltet ist, um mehrere Schmierstellen (17) mit Schmierstoff zu versorgen.

**9.** Sattelkupplung nach einem der Ansprüche 1 bis 8,
**dadurch gekennzeichnet,**
**dass** die mit der Schmierstoffpumpe (16) in Fluidverbindung stehenden Schmierstellen (17) an der Verriegelung der Sattelkupplung (11) und/oder an der Auflageplatte (13) und/oder an der Schwenkachse zwischen Auflageplatte (13) und Grundteil (12) ausgebildet sind.

**10.** Verfahren zur Schmierung einer Sattelkupplung (11), die an einem Zugfahrzeug montiert ist, wobei die Sattelkupplung (11) ein fahrzeugseitiges Grundteil (12) und eine gegenüber dem Grundteil (12) verschwenkbare Auflageplatte (13) aufweist,
**dadurch gekennzeichnet,**
**dass** die Schwenkbewegungen der Auflageplatte (13) relativ zum Grundteil (12) bzw. zum Zugfahrzeug ausgenutzt werden, um die Schmierstoffpumpe (16) anzutreiben.
